(19) Europäisches Patentamt
European Patent Office
Office européen des brevets

(11) Numéro de publication : **0 394 113 B1**

(12) **FASCICULE DE BREVET EUROPEEN**

(45) Date de publication du fascicule du brevet : **29.06.94 Bulletin 94/26**

(21) Numéro de dépôt : **90401024.6**

(22) Date de dépôt : **13.04.90**

(51) Int. Cl.$^5$ : **C08L 65/00,** C08L 23/08, // (C08L65/00, 23:08), (C08L23/08, 65:00)

# (54) Elastomère thermoplastique à base de copolymère éthylène/acrylate et de polynorbornène.

(30) Priorité : **17.04.89 FR 8905051**
**04.07.89 FR 8908986**

(43) Date de publication de la demande : **24.10.90 Bulletin 90/43**

(45) Mention de la délivrance du brevet : **29.06.94 Bulletin 94/26**

(84) Etats contractants désignés : **AT BE CH DE DK ES FR GB GR IT LI LU NL SE**

(56) Documents cités :
**EP-A- 0 018 751**
**GB-A- 2 162 526**

(73) Titulaire : **ELF ATOCHEM S.A.**
**4 & 8, Cours Michelet**
**La Défense 10**
**F-92800 Puteaux (FR)**

(72) Inventeur : **Hert, Marius**
**11, avenue Lepercq**
**F-60550 Verneuil en Halatte (FR)**
Inventeur : **Dousson, Christian**
**21, avenue Saint Exupéry**
**F-60180 Nogent sur Oise (FR)**

(74) Mandataire : **Rochet, Michel**
**ELF ATOCHEM S.A.**
**Département Propriété Industrielle**
**4-8, Cours Michelet**
**La Défense 10 - Cedex 42**
**F-92091 Paris-La-Défense (FR)**

**EP 0 394 113 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions thermoplastiques et, plus particulièrement, des compositions élastomères thermoplastiques comprenant des mélanges de copolymère éthylène/acrylate et de polynorbornène.

Les polymères de relativement haut poids moléculaire sont généralement incompatibles entre eux. Lorsqu'on mélange deux polymères de nature différente, le mélange possède généralement de médiocres propriétés mécaniques telles que résistance à la rupture et allongement à la rupture. Un couple de polymères est rarement suffisamment compatible pour former un mélange possédant des propriétés mécaniques aussi bonnes que celles du moins performant d'entre eux. Cependant, lorsque deux polymères sont compatibles, le mélange résultant peut montrer une combinaison intéressante de propriétés, c'est-à-dire que, outre de bonnes propriétés mécaniques, il peut également posséder d'autres caractéristiques favorables.

Ainsi, le brevet US-A-4 203 884 enseigne que des compositions comprenant le mélange d'une polyoléfine cristalline thermoplastique, de polynorbornène et d'une quantité de plastifiant du polynorbornène suffisante pour abaisser sa température de transition vitreuse jusqu'à la gamme des caoutchoucs possèdent des propriétés intéressantes. Plus particulièrement, ce document divulgue des compositions comprenant un mélange de 75 à 10 parties en poids de polyoléfine, de 25 à 90 parties en poids de polynorbornène et, pour 100 parties en poids de polynorbornène, de 30 à 400 parties en poids de plastifiant, lesdites compositions étant élastoplastiques, c'est-à-dire qu'elles possèdent des propriétés élastomériques tout en pouvant être transformées comme des thermoplastiques. A l'état fondu, selon cette technique, une partie du plastifiant peut se trouver présent dans la phase polyoléfine thermoplastique. Après refroidissement, le plastifiant migre substantiellement de la phase polyoléfine cristalline vers la phase polynorbornène pour faire partie de cette dernière. De la sorte, le plastifiant améliore la thermoplasticité ou la capacité de mise en oeuvre de la composition. En règle générale, pour un degré de thermoplasticité donné, la composition requiert d'autant moins de polyoléfine que la quantité de plastifiant est plus importante.

Le brevet US-A-4 203 884 divulgue également des compositions comprenant un mélange de 10 à 90 parties en poids de polyoléfine cristalline et de 90 à 10 parties en poids de polynorbornène réticulé dispersé sous forme de particules de petite taille, et de plastifiant en quantité suffisante pour abaisser la température de transition vitreuse du polynorbornène jusqu'à la gamme des caoutchoucs. Ainsi la réticulation du polynorbornène améliore le compromis des propriétés de la composition, en particulier la résistance à la rupture, la résistance aux solvants et les propriétés à haute température. De telles compositions sont obtenues par un procédé de vulcanisation dynamique selon lequel un mélange de polynorbornène, de plastifiant, de polyoléfine et de réticulants est malaxé à une température suffisante pour réticuler le polynorbornène.

Parmi les polyoléfines cristallines thermoplastiques utilisables selon le brevet US-A-4 203 884, on peut citer le polyéthylène et le polypropylène, ce dernier étant préféré comme le confirme la comparaison des résultats illustrés par les tableaux 1 et 2 du document cité. En effet, ce document enseigne que des compositions comprenant de 30 à 60 parties en poids de polynorbornène réticulé et de 70 à 40 parties en poids d'un polyéthylène de densité 0,960 g/cm$^3$ possèdent :

- un module à 100% d'allongement au moins égal à 6,8 MPa, c'est-à-dire trop élevé, et
- un allongement à la rupture ne dépassant pas 220%, c'est-à-dire trop faible pour la plupart des applications des élastomères thermoplastiques.

Les expériences de la demanderesse ont de plus démontré que ces mêmes compositions possèdent une déformation rémanente à la compression trop élevée et une dureté Shore A trop élevée pour la plupart des applications des élastomères thermoplastiques.

Le problème que la présente invention vise à résoudre consiste donc à choisir, parmi la vaste gamme des polymères d'éthylène, un polymère capable d'apporter à une composition élastoplastique à base de polynorbornène et de plastifiant un compromis de propriétés intéressantes la rendant apte à la plupart des applications des élastomères thermoplastiques et en particulier :

- une dureté Shore A ne dépassant pas 65,
- un allongement à la rupture qui n'est pas inférieur à 230%,
- un module à 100% d'allongement qui n'est pas supérieur à 6 MPa et de préférence pas supérieur à 3 MPa, et
- une déformation rémanente à la compression (mesurée à 70°C après 22 heures) ne dépassant pas 47%.

La demanderesse a mis en évidence le fait que cet objectif peut être atteint en ayant recours à un copolymère éthylène/acrylate.

Plus précisément, la présente invention a pour premier objet une composition comprenant un mélange d'environ 20 à 70 parties en poids de polynorbornène, d'environ 80 à 30 parties en poids d'un polymère cristallin à base d'oléfine et d'une quantité de plastifiant du polynorbornène suffisante pour abaissser sa température de transition vitreuse jusqu'à la gamme des caoutchoucs, caractérisée en ce que, comme polymère cristallin à base d'oléfine, on choisit un polymère ou un mélange de polymères comprenant :

- de 5 à 100% en poids d'un copolymère d'éthylène et d'au moins un acrylate d'alkyle dont le groupe a de 1 à 8 atomes de carbone, ledit copolymère ayant un indice de fluidité compris entre 0,1 et 20 dg/min. environ ; et
- de 0 à 95% en poids d'un copolymère d'éthylène et d'au moins une α-oléfine ayant de 3 à 10 atomes de carbone, ledit copolymère ayant une densité comprise entre 0,89 et 0,93 environ, un taux de cristallinité compris entre 15 et 50% environ et un indice de fluidité compris entre 0,5 et 15 dg/min. environ.

Les copolymères éthylène/acrylate entrant dans la composition de la polyoléfine cristalline sont bien connus de l'homme de l'art et peuvent être préparés par divers procédés, notamment sous haute pression et à température élevée. Ils comprennent de préférence de 0,5 à 10% environ en moles de motifs dérivés de l'acrylate. Parmi les acrylates pouvant entrer dans la constitution de ces copolymères, on citera tout particulièrement ceux de méthyle, éthyle, isopropyle, n-butyle, isobutyle, tertiobutyle et 2-éthylhexyle.

Par polynorbornène au sens de la présente invention, on entend un polymère ou copolymère amorphe du bicyclo[2,2,1] heptène-2 et de ses dérivés substitués tels que décrits dans le brevet US-A-3 676 390. Parmi les plastifiants du polynorbornène capables d'abaisser sa température de transition vitreuse jusqu'à la gamme des caoutchouc, on peut citer les huiles lourdes aromatiques, naphténiques ou paraffiniques dérivées du pétrole, de point de congélation inférieur à 0°C et de point éclair supérieur à 180°C, et les diesters de l'acide phtalique tels que les phtalates de dioctyle ou de didodécyle. Ces plastifiants peuvent être utilisés purs ou en mélange.

Les copolymères éthylène/α-oléfine présents dans la composition selon l'invention sont bien connus de l'homme de l'art et peuvent être préparés par divers procédés, soit sous basse pression et à température modérée, soit sous haute pression et à température élevée. Correspondant à la gamme de densité indiquée, leur teneur molaire en α-oléfine est généralement comprise entre 1 et 10%, selon la nature de l'α-oléfine. Parmi les α-oléfines pouvant entrer dans la constitution de ces copolymères, on citera tout particulièrement le propylène, le butène-1, l'hexène-1, le méthyl-4 pentène-1 et l'octène-1. Parmi les copolymères éthylène/α-oléfine utilisables selon la présente invention, on préfère avantageusement des terpolymères éthylène/propylène/butène-1, ainsi que des copolymères d'éthylène et d'α-oléfines supérieures (c'est-à-dire ayant au moins 4 atomes de carbone), conformes au brevet européen n° 070 220. Ces derniers sont des copolymères d'hétérogénéité macromoléculaire particulièrement marquée, c'est-à-dire dans lesquels la teneur en α-oléfine peut s'écarter notablement, selon les fractions cristallines ou amorphes dans lesquelles on la mesure, de la teneur moyenne en α-oléfine dans le copolymère. Dans certains copolymères de ce type, l'hétérogénéité peut être telle que la teneur en α-oléfine dans une fraction cristalline soit 1/10$^{e}$ (un dixième) de la teneur moyenne et que la teneur en α-oléfine dans une fraction amorphe soit jusqu'à 5 fois la teneur moyenne. Par ailleurs, de tels copolymères hétérogènes sont avantageusement tels que leurs fractions cristallines présentent un pic unique de fusion à une température comprise entre 116° et 130°C.

Parmi leurs autres caractéristiques préférentielles, on peut citer :

- un taux d'insaturation global compris entre 0,25 et 0,50 double liaison environ pour 1000 atomes de carbone,
- un indice de polydispersité compris entre 3 et 9 environ lorsque le copolymère comprend une seule α-oléfine, entre 6 et 12 lorsque le copolymère comprend au moins deux α-oléfines,
- un poids moléculaire moyen en nombre $M_n$ compris entre 12 000 et 60 000 environ.

Afin d'améliorer le compromis des propriétés des compositions selon l'invention, il est avantageux d'effectuer la réticulation du polynorbornène, par exemple par un procédé de vulcanisation dynamique. La présente invention a donc pour second objet une composition thermoplastique comprenant un mélange d'environ 20 à 70 parties en poids de polynorbornène réticulé, d'environ 80 à 30 parties en poids d'un polymère cristallin à base d'oléfine et d'une quantité de plastifiant du polynorbornène suffisante pour abaisser sa température de transition vitreuse jusqu'à la gamme des caoutchoucs, caractérisée en ce que comme polymère cristallin à base d'oléfine, on choisit un polymère ou un mélange de polymères comprenant :

- de 5 à 100% en poids d'un copolymère d'éthylène et d'au moins un acrylate d'alkyle dont le groupe a de 1 à 8 atomes de carbone, ledit copolymère ayant un indice de fluidité compris entre 0,1 et 20 dg/min. environ ; et
- de 0 à 95% en poids d'un copolymère d'éthylène et d'au moins une α-oléfine ayant de 3 à 10 atomes de carbone, ledit copolymère ayant une densité comprise entre 0,89 et 0,93 environ, un taux de cristallinité compris entre 15 et 50% environ et un indice de fluidité compris entre 0,5 et 15 dg/min. environ.

Le copolymère éthylène/α-oléfine et le copolymère éthylène/acrylate d'alkyle présents dans la composition thermoplastique selon l'invention ont déjà été décrits ci-dessus de manière détaillée au sujet des compositions comprenant un polynorbornène non réticulé. Dans les compositions thermoplastiques selon l'invention, le polynorbornène plastifié réticulé se présente avantageusement sous forme de petites particules dispersées, ce qui permet à la composition d'être transformée et mise en oeuvre comme n'importe quel matériau thermoplastique.

En général, les systèmes de réticulation adaptés pour la vulcanisation de caoutchouc diénique peuvent être utilisés pour la réticulation du polynorbornène dans les compositions thermoplastiques selon l'invention. Parmi les agents réticulants satisfaisants pour les caoutchoucs, on peut citer les agents de vulcanisation à base de soufre, de peroxyde, de résine phénolique, de composés azo, maléimido, quinoïde et uréthane, tels que, par exemple, du soufre libre ou des composés donneurs de soufre comme le disulfure de tétraméthylthiurame, le disulfure de thiurame, le disulfure de benzothiazyle et l'hexasulfure de dipentaméthylène thiurame, ou encore la m-phénylène bis-maléimide, la benzoquinone dioxime, le peroxyde de plomb, la diorthotolyl guanidine, la 4,4'-dithiodimorpholine, etc. Ces agents de vulcanisation peuvent être avantageusement utilisés en association avec au moins un activateur ou accélérateur de vulcanisation, tel que l'oxyde de zinc, l'oxyde de magnésium, le benzothiazole sulfamide, le chlorure d'étain, le dibutyldithiocarbamate de zinc, le phényléthyldithiocarbamate de zinc,l'éthyldithiocarbamate de tellure, etc. Lorsque du soufre libre ou un composé donneur de soufre est utilisé comme agent de vulcanisation, il est préférable d'utiliser une quantité importante d'activateur ou accélérateur de vulcanisation, c'est-à-dire, par exemple, un poids d'activateur ou accélérateur compris entre 1 et 3 fois environ le poids d'agent de vulcanisation.

Les constituants du système de réticulation, et notamment l'agent de vulcanisation, sont utilisés dans les proportions usuelles connues de l'homme de l'art pour obtenir la réticulation quasi-complète du polynorbornène sans pour autant réduire son élasticité au point qu'il ne soit plus caoutchouteux. Dans les compositions thermoplastiques selon l'invention, le polynorbornène est de préférence réticulé jusqu'au point où pas plus de 10% environ, de préférence pas plus de 5% environ, du polynorbornène puisse être extrait par un solvant, tel que le xylène bouillant, dans lequel le polynorbornène non-réticulé est complètement soluble, ainsi que le copolymère éthylène/$\alpha$-oléfine et le copolymère éthylène/acrylate d'alkyle. Ce test d'extraction permet au passage de vérifier que le copolymère éthylène/acrylate et le cas échéant le copolymère éthylène/$\alpha$-oléfine n'ont pas eux-mêmes été substantiellement réticulés, ce qui aurait pour effet de nuire à la thermoplasticité de la composition.

Pour certaines applications des compositions selon l'invention, leur résistance à la rupture et/ou la résistance aux huiles peuvent être améliorées, sans pour autant nuire au compromis favorable de propriétés décrit précédemment, en remplaçant partiellement le copolymère éthylène/$\alpha$-oléfine par un polymère cristallin essentiellement à base de propylène. Selon cette variante de l'invention, on remplace jusqu'à 60% en poids, et de préférence jusqu'à 40% en poids, du copolymère éthylène/$\alpha$-oléfine par un polymère, d'indice de fluidité (déterminé selon la norme ASTM D 1238 à 230°C sous 2,16 kg) compris entre 0,3 et 10 dg/min., comprenant au moins 80% en moles de motifs dérivés du propylène et au plus 20% en moles de motifs dérivés d'un comonomère choisi parmi l'éthylène et les $\alpha$-oléfines ayant de 4 à 12 atomes de carbone. Ledit polymère est de nature cristalline et, lorsqu'il est constitué uniquement de motifs dérivés du propylène, de préférence isotactique.

Enfin, pour les applications dans lesquelles on recherche une résistance élevée à l'ozone et/ou au vieillissement thermique, les compositions selon l'invention pourront comprendre un élastomère oléfinique, celuici venant en remplacement partiel du polynorbornène, de telle sorte qu'il puisse remplacer jusqu'au tiers du poids du polynorbornène présent. Comme élastomère oléfinique utilisable dans les compositions selon l'invention, on peut citer notamment un terpolymère d'éthylène avec au moins une $\alpha$-oléfine ayant de 3 à 6 atomes de carbone et au moins un diène. Plus particulièrement, on préfère les terpolymères éthylène-propylène-diène, le diène étant choisi parmi les diènes linéaires ou cycliques, conjugués ou non-conjugués comme par exemple le butadiène, l'isoprène, le 1,3-pentadiène, le 1,4-pentadiène, le 1-4-hexadiène, le 1,5-hexadiène, le 1,9 décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)-2-norbornène, le 1,5-cyclooctadiène, le bicyclo [2,2,2] octa-2,5-diène, le cyclopentadiène, le 4,7,8,9-tétrahydroindène et l'isopropylidène tétrahydroindène. De tels terpolymères élastomériques utilisables conformément à la présente invention comprennent en général entre 15% et 60% environ en moles de motifs dérivés du propylène et entre 0,1% et 20% environ en moles de motifs dérivés du diène.

Les propriétés des compositions selon l'invention peuvent être avantageusement modifiées, pour les besoins de certains usages particuliers, par l'addition d'ingrédients conventionnels tels que :

- pigments blancs (oxyde de titane) ou colorés,
- agents de couplage, tels que silanes ou titanates,
- antidégradants tels que, par exemple, le sel de zinc du mercaptobenzimidazole,
- stabilisants, tels que, par exemple, la 2,2,4-triméthyl-1,2-dihydroquinoléine polymérisée,
- adjuvants de mise en oeuvre, tels que des amines aliphatiques à chaîne longue, des sels de l'acide stéarique, etc.

- charges pulvérulentes, telles que noir de carbone, silice, kaolin, alumine, argile, alumino-silicate, talc, carbonate, et
- lubrifiants, tels que l'acide stéarique.

En particulier, l'addition de charges pulvérulentes a pour effet d'améliorer la résistance à la rupture et, dans certains cas, l'allongement à la rupture de la composition thermoplastique selon l'invention. La quantité de charge pouvant être incorporée à la composition peut atteindre jusqu'à 150 parties environ pour 100 parties en poids de polynorbornène, cette quantité étant bien évidemment variable selon la nature de la charge.

Les compositions thermoplastiques selon l'invention, dans lesquelles le polynorbornène est réticulé, sont de préférence préparées par vulcanisation dynamique, c'est-à-dire en malaxant un mélange de polynorbornène, de plastifiant, de copolymère éthylène/acrylate, de système de réticulation (tel que défini ci-dessus) et, le cas échéant de copolymère éthylène/$\alpha$-oléfine à une température suffisante et pendant une durée suffisante pour réticuler le polynorbornène. Le malaxage peut être effectué dans un appareillage conventionnel tel que par exemple un malaxeur Banbury, un malaxeur Brabender, un malaxeur Rhéocord ou une extrudeuse, à une température comprise entre 110° et 220°C environ pendant une durée comprise entre 3 et 15 minutes environ, cette durée étant d'autant moins longue que la température est plus élevée. Avant cette étape de malaxage, le mélange peut être d'abord homogénéisé dans un mélangeur interne à température modérée comprise entre 60° et 120°C environ.

Les compositions selon l'invention peuvent être utilisées pour fabriquer des produits finis et articles industriels par les techniques d'extrusion, d'injection-moulage et de moulage par compression.

En particulier, elles peuvent être extrudées sur des extrudeuses de même type que celles couramment utilisées pour les polyoléfines, c'est-à-dire ayant un rapport longueur/diamètre de vis généralement compris entre 18 et 28 environ et un taux de compression de préférence voisin de 3,0. Le profil de température affiché le long de la vis est généralement assez plat, la différence de température entre l'entrée et la filière étant de 10°C à 20°C environ. La température de la composition dans l'extrudeuse (température de la matière) peut être comprise entre 150°C et 220°C environ, de préférence entre 160° et 180°C. Ces extrudeuses sont équipées de filières profilés (par exemple profilés de menuiserie industrielle). La vitesse d'extrusion se situe entre 15 et 50 mètres par minute environ et l'extrudat ne subit pratiquement aucun étirage en sortie ; il est refroidi dans un bain d'eau et passe sur un banc de tirage dont la vitesse est généralement comprise entre 100% et 110% environ de la vitesse d'extrusion.

Les compositions selon l'invention peuvent également être injectées au moyen de presses à injection de même type que celles couramment utilisées pour le polyéthylène haute et basse densité et le polypropylène. La température de la matière dans la presse, fonction de la proportion de plastifiant dans la composition, est généralement comprise entre 120°C et 200°C environ. Cette température est d'autant plus faible que la proportion de plastifiant est plus élevée. Il convient généralement d'utiliser une pression d'injection nettement plus élevée que la pression de service, de manière à augmenter la fluidité de la matière pendant l'injection. A titre d'exemple, on pourra utiliser une pression d'injection de 700 bars lorsque la pression de service est de 150 bars. La vitesse de la vis de plastification pourra couramment atteindre 100 à 200 tours par minute environ. Selon la cadence d'injection recherchée, la température du moule pourra être choisie entre -10°C et +40°C environ.

Des applications concrètes des compositions selon l'invention comprennent notamment des tuyaux souples, des joints pour les industries du bâtiment et de l'automobile, des soufflets de protection pour l'industrie automobile, des articles injectés, tels que des roues pleines pour l'industrie du jouet, etc.

Les exemples ci-après sont donnés à titre illustratif et non limitatif de la présente invention.

Exemple 1 (comparatif)

Dans une première étape, du polynorbornène est formulé avec un plastifiant, une charge, un antidégradant, un agent de vulcanisation, un pigment et un lubrifiant, dans un mélangeur interne tournant à 100 tours/min pendant 6 minutes, régulé à 80°C, puis la formulation obtenue est mise sous forme de feuille par passage sur un mélangeur à cylindre régulé à 60°C dans lequel on ajoute un accélérateur de vulcanisation. Dans une seconde étape, la masse caoutchoutique est additionnée d'une polyoléfine cristalline et reprise sur un malaxeur Brabender tournant à 90 tours/min à une température de 180°C pendant 8 minutes. La composition résultante est récupérée et moulée en plaques de 2,5 mm par compression, sur lesquelles on mesure les propriétés suivantes :

- dureté Shore A déterminée selon la norme ASTM-D 2240,
- allongement à la rupture, exprimé en % et déterminé selon la norme ASTM-D 412,
- module à 100% d'allongement, exprimé en MPa et déterminé selon la norme ASTM-D 412,

- set d'allongement, exprimé en % et déterminé selon la norme ASTM-D 412 (après un allongement de 100%).

Enfin, la déformation rémanente à la compression (DRC) pendant 22 heures à 70°C est mesurée sur des plots de 12,5 mm écrasés de 25%, déterminée selon la norme ASTM-D-395 et exprimée en %. Dans cet exemple comparatif :

- la polyoléfine cristalline est un polyéthylène conforme à l'enseignement du brevet US-A-4 203 884, de densité 0,962 et d'indice de fluidité 5,3 dg/min., commercialisé par la Société SOLVAY sous la dénomination ELTEX A 1050 F,
- le polynorbornène utilisé est commercialisé par la demanderesse sous la dénomination NORSOREX,
- le plastifiant est une huile paraffinique de point éclair égal à 225°C et de point de congélation égal à -10°C, commercialisée par la Société EXXON sous la dénomination FLEXON 876,
- la charge pulvérulente est du kaolin calciné,
- l'antidégradant est le sel de zinc du mercaptobenzimidazole commercialisé par la Société SAFIC-ALCAN sous la dénomination ZMBI,
- l'agent de vulcanisation est une résine phénolique de formule :

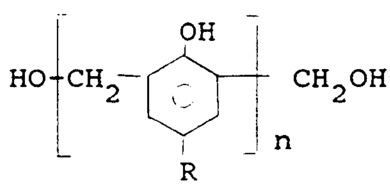

dans laquelle n = 4 ou 5 et R désigne un radical alkyle, commercialisée par la Société SCHENECTADY sous l'appellation SP 1045,
- l'agent de stabilisation thermique est un élastomère de polyéthylène chlorosulfoné commercialisé par la Société DU PONT DE NEMOURS sous la dénomination HYPALON 20,
- l'accélérateur de vulcanisation est un mélange équipondéral de chlorure stanneux $SnCl_2$, $2H_2O$ et d'oxyde de zinc,
- le pigment est l'oxyde de titane, et
- le lubrifiant est l'acide stéarique.

Les quantités pondérales des divers ingrédients de la composition sont indiquées dans le tableau ci-après, ainsi que les résultats des mesures de propriétés effectuées comme décrit ci-dessus.

Exemples 2 et 3

En opérant dans les mêmes conditions qu'à l'exemple 1, et en utilisant les mêmes ingrédients, à l'exception de la nature du polymère cristallin à base d'oléfine et, pour l'exemple 3, du plastifiant, on prépare différentes compositions dont les propriétés sont indiquées dans le tableau I ci-après.

Le polymère cristallin à base d'oléfine utilisé est un copolymère éthylène/acrylate de n-butyle, de densité 0,930, possédant un indice de fluidité de 0,65 dg/min et comprenant 7,3% en poids d'acrylate de n-butyle.

Le plastifiant utilisé dans l'exemple 3 est un mélange comprenant, en poids, deux tiers de l'huile paraffinique FLEXON 876 et un tiers de di-octylphtalate.

TABLEAU I

| Exemple | 1 | 2 | 3 |
|---|---|---|---|
| Polynorbornène | 55,4 | 55,4 | 70 |
| Plastifiant | 83,2 | 83,2 | 105 |
| Charge | 22,2 | 22,2 | 28 |
| Antidégradant | 1,1 | 1,1 | 1,4 |
| Agent de vulcanisation | 12,1 | 12,1 | 16,8 |
| Pigment | 5,5 | 5,5 | 7 |
| Lubrifiant | 0,6 | 0,6 | 0,7 |
| Accélérateur de vulcanisation | 5,0 | 5,0 | 6,4 |
| Polymère cristallin à base d'oléfine | 44,6 | 44,6 | 30 |
| Dureté Shore A | 78 | 63 | 40 |
| Allongement à la rupture | 190 | 240 | 330 |
| Module à 100% d'allongement | 7,8 | 1,7 | 0,8 |
| set d'allongement | 26 | 20 | 17 |
| D R C | 49 | 41 | 47 |

Exemples 4 et 5

Dans une première étape, du polynorbornène est formulé avec un plastifiant, une charge, un antidégradant, un agent de vulcanisation, et un lubrifiant, dans un mélangeur interne tournant à 100 tours/min. pendant 6 minutes, régulé à 80°C, puis la formulation obtenue est mise sous forme de feuille par passage sur un mélangeur à cylindre régulé à 60°C dans lequel on ajoute un accélérateur de vulcanisation. Dans une seconde étape, la masse caoutchoutique est additionnée d'un copolymère éthylène/α-oléfine et d'un copolymère éthylène/acrylate et reprise sur un malaxeur Brabender tournant à 90 tours/min. à une température de 180°C pendant 8 minutes. La composition résultante est récupérée et moulée en plaques de 2,5 mm par compression, sur lesquelles on mesure les propriétés suivantes :

- dureté Shore A déterminée selon la norme ASTM-D 2240,
- allongement à la rupture, exprimé en % et déterminé selon la norme ASTM-D 412,
- exsudation du plastifiant, déterminée par toucher des plaques moulées 8 jours après leur fabrication.

Dans ces exemples :

- le copolymère éthylène/α-oléfine est un copolymère éthylène/butène-1 de densité 0,910, possédant un indice de fluidité de 1 dg/min. et un taux de cristallinité de 30%, commercialisé sous la dénomination NORSOFLEX FW 1600,
- le copolymère éthylène/acrylate est un copolymère comprenant 15% en poids d'acrylate de méthyle et possédant un indice de fluidité de 0,3 dg/min.
- le polynorbornène utilisé est commercialisé par la demanderesse sous la dénomination NORSOREX,
- le plastifiant est une huile naphténique de point éclair égal à 195°C, commercialisée par la Société TEXACO sous la dénomination DEALEN RD 25,
- la charge pulvérulente est du kaolin calciné,

- le lubrifiant est l'acide stéarique,
- l'agent de vulcanisation est un mélange équipondéral de disulfure de tétraméthylthiurame et de 4,4'-dithiodimorpholine,
- l'accélérateur de vulcanisation est un mélange de dibutylcarbamate de zinc, de phényléthylcarbamate de zinc, d'éthyl-dithiocarbamate de tellure et d'oxyde de zinc dans des rapports pondéraux 2/0,5/1/3,
- le stabilisant est un produit commercialisé par la société BAYER sous la dénomination VULKALENT E.

Les quantités pondérales des divers ingrédients de la composition sont indiquées dans le tableau II ci-après, ainsi que les résultats des mesures de propriétés effectuées comme décrit ci-dessus.

TABLEAU II

| Exemple | 4 | 5 |
|---|---|---|
| Polynorbornène | 35 | 40 |
| Plastifiant | 79 | 90 |
| Charge | 35 | 40 |
| Agent de vulcanisation | 1,0 | 1,2 |
| Lubrifiant | 0,5 | 0,5 |
| Accélérateur de vulcanisation | 2,2 | 2,6 |
| Copolymère éthylène/α-oléfine | 37 | 43 |
| Copolymère éthylène/acrylate | 28 | 17 |
| Dureté Shore A | 64 | 60 |
| Allongement à la rupture | 350 | 300 |
| Exsudation | non | non |

## Revendications

### Revendications pour les Etats contractants suivants : AT, BE, CH, LI, DE, DK, FR, GB, GR, IT, LU, NL, SE

1. Composition comprenant un mélange de 20 à 70 parties en poids de polynorbornène, de 80 à 30 parties en poids d'un polymère cristallin à base d'oléfine et d'une quantité de plastifiant du polynorbornène suffisante pour abaisser sa température de transition vitreuse jusqu'à la gamme des caoutchoucs, caractérisée en ce que, comme polymère cristallin à base d'oléfine, on choisit un polymère ou un mélange de polymères comprenant :
   - de 5 à 100% en poids d'un copolymère d'éthylène et d'au moins un acrylate d'alkyle dont le groupe a de 1 à 8 atomes de carbone, ledit copolymère ayant un indice de fluidité compris entre 0,1 et 20 dg/min. ; et
   - de 0 à 95% en poids d'un copolymère d'éthylène et d'au moins une α-oléfine ayant de 3 à 10 atomes de carbone, ledit copolymère ayant une densité comprise entre 0,89 et 0,93, un taux de cristallinité

compris entre 15 et 50% et un indice de fluidité compris entre 0,5 et 15 dg/min.

2. Composition thermoplastique comprenant un mélange de 20 à 70 parties en poids de polynorbornène réticulé, de 80 à 30 parties en poids d'un polymère cristallin à base d'oléfine et d'une quantité de plastifiant du polynorbornène suffisante pour abaisser sa température de transition vitreuse jusqu'à la gamme des caoutchoucs, caractérisée en ce que, comme polymère cristallin à base d'oléfine, on choisit un polymère ou un mélange de polymères comprenant :
   - de 5 à 100% en poids d'un copolymère d'éthylène et d'au moins un acrylate d'alkyle dont le groupe a de 1 à 8 atomes de carbone, ledit copolymère ayant un indice de fluidité compris entre 0,1 et 20 dg/min. ; et
   - de 0 à 95% en poids d'un copolymère d'éthylène et d'au moins une α-oléfine ayant de 3 à 10 atomes de carbone, ledit copolymère ayant une densité comprise entre 0,89 et 0,93, un taux de cristallinité compris entre 15 et 50% et un indice de fluidité compris entre 0,5 et 15 dg/min.

3. Composition thermoplastique selon la revendication 2, caractérisée en ce que le polynorbornène est réticulé jusqu'au point où pas plus de 10% du polynorbornène puisse être extrait par un solvant.

4. Composition selon l'une des revendications 1 à 3, caractérisée en ce que le copolymère d'éthylène et d'au moins un acrylate d'alkyle comprend de 0,5 à 10% en moles de motifs dérivés de l'acrylate.

5. Composition thermoplastique selon l'une des revendications 1 à 4, caractérisée en ce qu'elle comprend en outre au moins un additif choisi parmi les pigments blancs ou colorés, les agents de couplage, les antidégradants, les stabilisants, les adjuvants de mise en oeuvre, les charges pulvérulentes et les lubrifiants.

6. Composition thermoplastique selon la revendication 5, caractérisée en ce que ledit additif est une charge pulvérulente utilisée à raison de jusqu'à 150 parties pour 100 parties en poids du polynorbornène.

7. Composition thermoplastique selon l'une des revendications 1 à 6, caractérisée en ce qu'elle possède :
   - une dureté Shore A ne dépassant pas 65,
   - un allongement à la rupture qui n'est pas inférieur à 230%,
   - un module à 100% d'allongement qui n'est pas supérieur à 6 MPa et
   - une déformation rémanente à la compression (mesurée à 70°C après 22 heures) ne dépassant pas 47%.

8. Procédé de préparation d'une composition thermoplastique selon la revendication 2, caractérisé en ce qu'on malaxe un mélange de polynorbornène, de plastifiant, de copolymère éthylène/acrylate, de système de réticulation et le cas échéant de copolymère éthylène/α-oléfine, à une température suffisante et pendant une durée suffisante pour réticuler le polynorbornène.

9. Procédé selon la revendication 8, caractérisé en ce que le malaxage est effectué à une température comprise entre 110° et 220°C.

10. Procédé selon l'une des revendications 8 et 9, caractérisé en ce que le malaxage est effectué pendant une durée comprise entre 3 et 15 minutes.

**Revendications pour l'Etat contractant suivant : ES**

1. Procédé de fabrication d'articles élastomères consistant à transformer par extrusion, injection-moulage ou moulage par compression une composition obtenue par vulcanisation dynamique d'un mélange de
   - 20 à 70 parties en poids de polynorbornène,
   - 80 à 30 parties en poids d'un polymère ou un mélange de polymères comprenant :
     - de 5 à 100% en poids d'un copolymère d'éthylène et d'au moins un acrylate d'alkyle dont le groupe a de 1 à 8 atomes de carbone, ledit copolymère ayant un indice de fluidité compris entre 0,1 et 20 dg/min. ; et
     - de 0 à 95% en poids d'un copolymère d'éthylène et d'au moins une α-oléfine ayant de 3 à 10 atomes de carbone, ledit copolymère ayant une densité comprise entre 0,89 et 0,93, un taux de cristallinité compris entre 15 et 50% et un indice de fluidité compris entre 0,5 et 15 dg/min.,
   - une quantité de plastifiant du polynorbornène suffisante pour abaisser sa température de transition

vitreuse jusqu'à la gamme des caoutchoucs, et
- un système de réticulation du polynorbornène.

2. Procédé de fabrication selon la revendication 1, caractérisé en ce que la composition est transformée par extrusion sur une extrudeuse ayant un rapport longueur/diamètre de vis compris entre 18 et 28, la température de la composition dans l'extrudeuse étant comprise entre 150°C et 220°C.

3. Procédé de fabrication selon la revendication 2, caractérisé en ce que la vitesse d'extrusion se situe entre 15 et 50 mètres par minute.

4. Procédé selon l'une des revendications 1 à 3, caractérisé en ce que le mélange soumis à vulcanisation comprend en outre au moins un élastomère oléfinique, celui-ci venant en remplacement partiel du polynorbornène.

5. Procédé de fabrication selon l'une des revendications 1 à 4, caractérisé en ce que le mélange soumis à vulcanisation comprend en outre au moins une charge pulvérulente à raison de jusqu'à 150 parties en poids pour 100 parties en poids de polynorbornène.

6. Procédé selon l'une des revendications 1 à 5, caractérisé en ce que dans le mélange soumis à vulcanisation jusqu'à 60% en poids du copolymère éthylène/α-oléfine est remplacé par un polymère, d'indice de fluidité (déterminé selon la norme ASTM D 1238 à 230°C sous 2,16 kg) compris entre 0,3 et 10 dg/min., comprenant au moins 80% en moles de motifs dérivés du propylène et au plus 20% en moles de motifs dérivés d'un comonomère choisi parmi l'éthylène et les α-oléfines ayant de 4 à 12 atomes de carbone.

7. Procédé de fabrication selon la revendication 1, caractérisé en ce que la composition est transformée par injection dans une presse, la température de la matière dans la presse étant comprise entre 120°C et 200°C.

8. Article élastomère obtenu par un procédé de fabrication selon l'une des revendications 1 à 7.

## Patentansprüche

### Patentansprüche für folgende Vertragsstaaten : AT, BE, CH, LI, DE, DK, FR, GB, GR, IT, LU, NL, SE

1. Zusammensetzung, die eine Mischung von 20 bis 70 Gewichtsteilen Polynorbornen, 80 bis 30 Gewichtsteilen eines kristallinen Polymers auf Olefinbasis und eine solche Menge eines Weichmachers für Polynorbornen beinhaltet, die die Glasübergangstemperatur der Zusammensetzung bis auf den Temperaturbereich von Kautschuk verringert, dadurch gekennzeichnet, daß das kristalline Polymer auf Olefinbasis ein Polymer oder eine Mischung von Polymeren folgender Zusammensetzung ist:
   - 5 bis 100 Gew.% eines Copolymers aus Ethylen und mindestens einem Alkylacrylat mit 1 bis 8 Kohlenstoffatomen, das genannte Copolymer hat einen Fließindex zwischen 0,1 und 20 dg/min; und
   - 0 bis 95 Gew.% eines Copolymers aus Ethylen und mindestens einem α-olefin mit 3 bis 10 Kohlenstoffatomen, das genannte Copolymer hat eine Dichte zwischen 0,89 und 0,93, einen Kristallisationsgrad zwischen 15 und 50 % und einen Fließindex zwischen 0,5 und 15 dg/min.

2. Thermoplastische Zusammensetzung, die eine Mischung von 20 bis 70 Gewichtsteilen von vernetztem Polynorbornen, 80 bis 30 Gewichtsteilen eines kristallinen Polymers auf Olefinbasis und eine solche Menge eines Weichmachers für Polynorbornen beinhaltet, die die Glasübergangstemperatur der Zusammensetzung bis auf den Temperaturbereich von Kautschuk verringert, dadurch gekennzeichnet, daß das kristalline Polymer auf Olefinbasis ein Polymer oder eine Mischung von Polymeren folgender Zusammensetzung ist:
   - 5 bis 100 Gew.% eines Copolymers aus Ethylen und mindestens einem Alkylacrylat mit 1 bis 8 Kohlenstoffatomen, das genannte Copolymer hat einen Fließindex zwischen 0,1 und 20 dg/min; und
   - 0 bis 95 Gew.% eines Copolymers aus Ethylen und mindestens einem α-Olefin mit 3 bis 10 Kohlenstoffatomen, das genannte Copolymer hat eine Dichte zwischen 0,89 und 0,93, einen Kristallisationsgrad zwischen 15 und 50 % und einen Fließindex zwischen 0,5 und 15 dg/min.

3. Thermoplastische Zusammensetzung nach Anspruch 2, dadurch gekennzeichnet, daß das Polynorbornen vernetzt ist bis zu dem Punkt, wo nicht mehr als 10 % des Polynorbornens durch ein Lösungsmittel extrahiert werden können.

4. Zusammensetzung nach einem der Ansprüche 1 bis 3, dadurch gekennzeichnet, daß das Copolymer von Ethylen und mindestens einem Alkylacrylat 0,5 bis 10 Mol-% einer von Acrylat abgeleiteten Grundeinheit enthält.

5. Thermoplastische Zusammensetzung nach einem der Ansprüche 1 bis 4, dadurch gekennzeichnet, daß sie mindestens ein weiteres Additiv enthält, das aus der Gruppe der Weiß- oder Farbpigmente, der Kupplerstoffe, der Zerfallsinhibitoren, der Stabilisatoren, der Hilfsmittel für Anwendung und Verarbeitung, der pulverförmigen Zusatzstoffe und der Schmiermittel gewählt ist.

6. Thermoplastische Zusammensetzung nach Anspruch 5, dadurch gekennzeichnet, daß das genannte Additiv ein pulverförmiger Zusatzstoff ist, der im Verhältnis bis zu 150 Gewichtsteilen auf 100 Gewichtsteile Polynorbornen eingesetzt wird.

7. Thermoplastische Zusammensetzung nach einem der Ansprüche 1 bis 6, durch folgende Eigenschaften gekennzeichnet:
   - einer Shore-A-Härte nicht über 65,
   - einer Bruchdehnung nicht unter 230 %,
   - einem Modul von 100 % Dehnung bei nicht mehr als 6 MPa und
   - einem Druckformungsrest (bei 70°C nach 22 Stunden gemessen) von nicht mehr als 47 %.

8. Verfahren zur Herstellung einer thermoplastischen Zusammensetzung nach Anspruch 2, dadurch gekennzeichnet, daß man eine Mischung von Polynorbornen, einem Weichmacher, einem Ethylen/Acrylat-Copolymer, einem Vernetzungssystem und gegebenenfalls einem Ethylen/$\alpha$-Olefin-Copolymer knetet, um bei einer genügend hohen Temperatur und während einer genügend langen Dauer das Polynorbornen zu vernetzen.

9. Verfahren nach Anspruch 8, dadurch gekennzeichnet, daß der Knetprozeß bei einer Temperatur zwischen 110 und 220°C durchgeführt wird.

10. Verfahren nach einem der Ansprüche 8 oder 9, dadurch gekennzeichnet, daß der Knetprozeß für eine Dauer zwischen 3 und 15 min durchgeführt wird.

**Patentansprüche für folgenden Vertragsstaat : ES**

1. Verfahren zur Herstellung von elastomeren Teilen durch Extrusion, Spritzgießen oder Formpressen einer Zusammensetzung, die man durch dynamische Vulkanisation einer Mischung von
   - 20 bis 70 Gew.-Teilen Polynorbornen,
   - 80 bis 30 Gew.-Teilen eines Polymers oder einer Mischung von Polymeren mit:
     - 5 bis 100 Gew.% eines Copolymers aus Ethylen und mindestens einem Alkylacrylat mit 1 bis 8 Kohlenstoffatomen, das genannte Copolymer hat einen Fließindex zwischen 0,1 und 20 dg/min; und
     - 0 bis 95 Gew.% eines Copolymers aus Ethylen und mindestens einem $\alpha$-Olefin mit 3 bis 10 Kohlenstoffatomen, das genannte Copolymer hat eine Dichte zwischen 0,89 und 0,93, einen Kristallisationsgrad zwischen 15 und 50 % und einen Fließindex zwischen 0,5 und 15 dg/min

   erhält.

2. Verfahren nach Anspruch 1, dadurch gekennzeichnet, daß die Zusammensetzung durch Extrusion in einem Extruder mit einem Längen/Durchmesser-Verhältnis der Schnecke zwischen 18 und 28 aufgearbeitet wird, und daß die Temperatur der Zusammensetzung im Extruder zwischen 150 und 220°C liegt.

3. Verfahren nach Anspruch 2, dadurch gekennzeichnet, daß die Extrusionsgeschwindigkeit zwischen 15 und 50 m/min liegt.

4. Verfahren nach einem der Ansprüche 1 bis 3, dadurch gekennzeichnet, daß die der Vulkanisation unterworfene Mischung mindestens ein weiteres olefinisches Elastomer enthält, das einen Teil des

Polynorbornens ersetzt.

5. Verfahren nach einem der Ansprüche 1 bis 4, dadurch gekennzeichnet, daß die der Vulkanisation unterzogene Mischung mindestens einen weiteren pulverförmigen Zusatzstoff in einem Verhältnis von bis zu 150 Gewichtsteilen zu 100 Gewichtsteilen Polynorbornen enthält.

6. Verfahren nach einem der Ansprüche 1 bis 5, dadurch gekennzeichnet, daß in der der Vulkanisation unterzogenen Mischung bis zu 60 Gewichtsprozent des Ethylen/α-Olefin-Copolymers durch ein Polymer ersetzt sind, das eine Fließzahl zwischen 0,3 und 10 dg/min hat (bestimmt nach der ASTM D 1238 bei 230°C unter 2,16 kg), mindestens 80 Mol-% einer vom Propylen abgeleiteten Grundeinheit und maximal 20 Mol.-% einer von einem Comonomeren von Ethylen und einem α-Olefin mit 4 bis 12 Kohlenstoffatomen abgeleiteten Grundeinheit enthält.

7. Verfahren nach Anspruch 1, dadurch gekennzeichnet, daß die Zusammensetzung in einer Spritzgußmaschine verarbeitet wird, und daß die Temperatur der Masse in der Maschine zwischen 120 und 200°C liegt.

8. Elastomerteile erhalten nach einem der Ansprüche 1 bis 7.

## Claims

**Claims for following Contracting States : AT, BE, CH, LI, DE, DK, FR, GB, GR, IT, LU, NL, SE**

1. Composition comprising a mixture of 20 to 70 parts by weight of polynorbornene, of 80 to 30 parts by weight of an olefin-based crystalline polymer and of a quantity of plasticizer for polynorbornene which is sufficient to lower its glass transition temperature to the rubber range, characterized in that the olefin-based crystalline polymer chosen is a polymer or a mixture of polymers comprising:
   - from 5 to 100 % by weight of a copolymer of ethylene and of at least one alkyl acrylate in which the alkyl group has from 1 to 8 carbon atoms, the said copolymer having a melt index of between 0.1 and 20 dg/min, and
   - from 0 to 95 % by weight of a copolymer of ethylene and of at least one α-olefin containing from 3 to 10 carbon atoms, the said copolymer having a relative density of between 0.89 and 0.93, a crystallinity of between 15 and 50 % and a melt index of between 0.5 and 15 dg/min.

2. Thermoplastic composition comprising a mixture of 20 to 70 parts by weight of crosslinked polynorbornene, of 80 to 30 parts by weight of an olefin-based crystalline polymer and of a quantity of plasticizer for polynorbornene which is sufficient to lower its glass transition temperature to the rubber range, characterized in that the olefin-based crystalline polymer chosen is a polymer or a mixture of polymers comprising:
   - from 5 to 100 % by weight of a copolymer of ethylene and of at least one alkyl acrylate in which the alkyl group has from 1 to 8 carbon atoms, the said copolymer having a melt index of between 0.1 and 20 dg/min, and
   - from 0 to 95 % by weight of a copolymer of ethylene and of at least one α-olefin containing from 3 to 10 carbon atoms, the said copolymer having a relative density of between 0.89 and 0.93, a crystallinity of between 15 and 50 % and a melt index of between 0.5 and 15 dg/min.

3. Thermoplastic composition according to Claim 2, characterized in that the polynorbornene is crosslinked to the point where not more than 10 % of the polynorbornene can be extracted with a solvent.

4. Composition according to one of Claims 1 to 3, characterized in that the copolymer of ethylene and of at least one alkyl acrylate contains from 0.5 to 10 mol% of units derived from the acrylate.

5. Thermoplastic composition according to one of Claims 1 to 4, characterized in that it additionally contains at least one additive chosen from white or coloured pigments, coupling agents, degradation inhibitors, stabilizers, processing aids, pulverulent fillers and lubricants.

6. Thermoplastic composition according to Claim 5, characterized in that the said additive is a pulverulent filler employed in a proportion of up to 150 parts per 100 parts by weight of polynorbornene.

7. Thermoplastic composition according to one of Claims 1 to 6, characterized in that it has:
   - a Shore A hardness not exceeding 65,
   - an elongation at break which is not lower than 230 %,
   - a modulus at 100% elongation which is not higher than 6 MPa and
   - a residual compression deformation (measured at 70°C after 22 hours) not exceeding 47 %.

8. Process for the preparation of a thermoplastic composition according to Claim 2, characterized in that a mixture of polynorbornene, plasticizer, ethylene/acrylate copolymer, crosslinking system and where appropriate, ethylene/α-olefin copolymer is kneaded at a sufficient temperature and for a sufficient period to crosslink the polynorbornene.

9. Process according to Claim 8, characterized in that the kneading is carried out at a temperature of between 110° and 220°C.

10. Process according to either of Claims 8 and 9, characterized in that the kneading is carried out for a period of between 3 and 15 minutes.

**Claims for the following Contracting State : ES**

1. Process for the manufacture of elastomeric articles consisting in converting, by extrusion, injection moulding or compression moulding, a composition obtained by dynamic vulcanization of a mixture of
   - 20 to 70 parts by weight of polynorbornene,
   - 80 to 30 parts by weight of a polymer or a mixture of polymers comprising:
     - from 5 to 100 % by weight of a copolymer of ethylene and of at least one alkyl acrylate in which the alkyl group has from 1 to 8 carbon atoms, the said copolymer having a melt index of between 0.1 and 20 dg/min, and
     - from 0 to 95 % by weight of a copolymer of ethylene and of at least one α-olefin containing from 3 to 10 carbon atoms, the said copolymer having a relative density of between 0.89 and 0.93, a crystallinity of between 15 and 50 % and a melt index of between 0.5 and 15 dg/min.,
   - a quantity of plasticizer for polynorbornene which is sufficient to lower its glass transition temperature to the rubber range, and
   - a crosslinking system for the polynorbornene.

2. Process for manufacture according to Claim 1, characterized in that the composition is converted by extrusion in an extruder which has a screw length/diameter ratio of between 18 and 28, the temperature of the composition in the extruder being between 150°C and 220°C.

3. Process for manufacture according to Claim 2, characterized in that the speed of extrusion lies between 15 and 50 metres per minute.

4. Process according to one of Claims 1 to 3, characterized in that the mixture subjected to vulcanization additionally comprises at least one olefinic elastomer, the latter partially replacing the polynorbornene.

5. Process for manufacture according to one of Claims 1 to 4, characterized in that the mixture subjected to vulcanization additionally comprises at least one pulverulent filler in a proportion of up to 150 parts by weight per 100 parts by weight of polynorbornene.

6. Process according to one of Claims 1 to 5, characterized in that in the mixture subjected to vulcanization up to 60 % by weight of the ethylene/α-olefin copolymer is replaced with a polymer of melt index (determined according to ASTM standard D 1238 at 230°C under 2.16 kg) of between 0.3 and 10 dg/min., containing at least 80 mol% of units derived from propylene and at most 20 mol% of units derived from a comonomer chosen from ethylene and α-olefins containing from 4 to 12 carbon atoms.

7. Process for manufacture according to Claim 1, characterized in that the composition is converted by injection in a press, the temperature of the material in the press being between 120°C and 200°C.

8. Elastomeric article obtained by a process for manufacture according to one of Claims 1 to 7.